# EUROPEAN PATENT APPLICATION

(11) **EP 4 484 037 A1**
(43) Date of publication of application: **01.01.2025**
(21) Application number: 23182779.1
(22) Date of filing: 30.06.2023
(51) Int. Cl.: B23B 51/02, B23B 51/00

(54) **DRILL CUTTING HEAD**

(71) Applicant: AB Sandvik Coromant, 811 81 Sandviken (SE)
(72) Inventor: ENGSTRÖM, Tord, 811 81 Sandviken (SE)
(74) Representative: Sandvik

(57) **Abstract**

The present invention relates drill cutting head wherein each main cutting edge comprises an innermost cutting-edge section creating an obtuse angle in the main-cutting edge towards the central edge, and in that a central web thinning forms an inner rake surface for the innermost cutting-edge section wherein, for each of the pairs of cutting edges, the central web thinning is formed between and borders the primary web thinning of the trailing main cutting edge and the primary clearance surface of the rotationally leading main cutting edge.

## Description

### TECHNICAL FIELD OF THE INVENTION

The present invention relates to a drill cutting head for chip removing machining. The drill cutting head is primarily intended for, but not limited to, machining in workpieces of metal material.

### BACKGROUND OF THE INVENTION AND PRIOR ART

Drill cutting heads for chip removing machining generally have a forward-facing cutting end forming a drill point. For a twist drill, a rearward-facing mount end configured for mounting in e.g., a machine spindle, a driving sleeve, a chuck, a socket or another type of fixture is generally provided. For exchangeable drill heads for drill tools, the axially rearward-facing mount end may comprise a mounting region configured to be mounted e.g., in a forward-facing mounting or fixture region of a drill tool body. In this disclosure, the term drill cutting head will refer to both kinds.

In the forward-facing cutting end, two or more cutting edges are typically provided. From each cutting edge, a helical chip flute extends in a peripheral envelope surface in a rearward direction. The chip flutes are configured for conducting chips away from the cutting edges during machining. The cutting edges may be straight or may follow a curved line from a central edge provided at a centre point of the front end to the peripheral envelope surface.

The central part of the cutting end may comprise a web thinning region for each chip flute to make the drill pointier. The central edge is often call chisel edge and is normally straight, and short compared to the main cutting edges.

The drawbacks with a pointy drill with a short chisel edge is that it becomes weaker and thus prone to wear or even breaking. On the other hand, a longer chisel edge may be stronger but may also have more difficulties entering the workpiece and requires more feed force and more torque to rotate the drill.

A drill with a web thinning area is known from WO2020070737A1. The web thinning area make the tip stronger with the disadvantage that it remains comparatively dull and with a relatively long center edge.

### SUMMARY OF THE INVENTION

It is an object of the present invention to provide a drill cutting head which can improve the quality of the drilled hole, e.g., improving the circularity of the hole cross section and follow the intended path through the workpiece.

A drill that has difficulties entering the workpiece is likely to move off centre and enter the workpiece at an angle. This is bad for the quality of the hole, which may then deviate from its nominal circular cross section, be drilled in the wrong place, extend in the wrong direction or extend through the workpiece forming a non-cylindrical hole, e.g. like a cone. It may also be bad for the drill as it wears more quickly, both the on the cutting edge and the periphery of the drill. These tendencies are worse for drills that have an extended length (L) in relation to their diameter (D), e.g., L > 5 x D, as they are weaker due to the reduced stiffness. There is thus a contradiction in achieving a drill that simultaneously has strong main cutting edges in the central part of the drill and easily enters the workpiece.

According to a first aspect of the invention, this objective is achieved by means of a drill cutting head that comprises an axially rearward-facing mount end capable of being releasably mountable within a fixture of a support body and an axially forward-facing cutting end for cutting a hole with diameter D as well as a central rotational axis extending between the mount end and the cutting end. The cutting end comprises at least two main cutting edges which extend from a central edge that attaches to the central rotational axis around which the drill rotates in direction R. For each cutting edge, the drill cutting head comprises a rake side comprising a helical chip flute configured for conducting chips away from the main cutting edge, and which is formed in the peripheral envelope surface and extend rearward from the main cutting edge as well as a primary web thinning. For each main cutting edge, the drill cutting head further comprises a clearance side comprising at least a primary clearance surface. A pair of the at least two cutting edges consist of a rotationally trailing main cutting edge and a directly rotationally leading main cutting edge. For each of the pairs of cutting edges, the primary web thinning extends between the chip flute of the trailing main cutting edge and the primary clearance surface of the leading main cutting edge. The rotationally leading cutting edge means the next cutting edge ahead in the rotational direction.

The drill cutting head of the embodiments of the present invention is characterized in that for each main cutting edge comprises an innermost cutting-edge section creating an obtuse angle in the main-cutting edge towards the central edge. It is further characterized in that a central web thinning forms an inner rake surface for the innermost cutting-edge section wherein, for each of the pairs of cutting edges, the central web thinning is formed between and borders the primary web thinning of the trailing main cutting edge and the primary clearance surface of the rotationally leading main cutting edge.

The "pair of edges" should be seen as a way of distinguishing between the main cutting edges and make it clearer where the structural features of the drill cutting head are located. In any pair of subsequent main cutting edges, the leading edge is rotationally ahead of the trailing edge.

The central web thinning of one cutting edge may further have the function of a secondary clearance surface for the rotationally leading main cutting edge.

Thanks to the innermost main cutting-edge section and the central web thinning, the central edge can be shortened without losing the strength necessary for a stable entry into the workpiece, which creates an improved center portion of the drill that is pointy at entry and strong immediately after entry. The innermost main cutting-edge section also creates a very short central edge but at the same time also creates a longer edge to actually generate a chip, which the central edge does not.

Thanks to the dual function of the central web thinning, forming both a rake surface for one inner cutting edge as well as secondary clearance surface for the rotationally leading main cutting edge, a drill point geometry is created that is both strong and can easily enter the workpiece as it creates a very short central edge. Another consequence of the dual function of the central concavity is that the tip of the drill cutting head, as seen in a side view substantially perpendicular to the innermost cutting-edge section, has an angle between each of the innermost cutting-edge sections and the central rotational axis that is larger than for any of the other cutting-edge sections with the central rotational axis. The effect of this a drill point that is both strong and sharp.

The central edge is the axially most forward part of the drill and enters the workpiece first. If the central edge does not pierce the workpiece in a good way the drill may start to drift off centre, i.e. it does not find the center. The longer the drill is in relation to its diameter D, the worse this problem becomes. If this happens, the drill may enter the workpiece at the wrong angle and the linear extension of the hole will not be as intended. It may also cause the hole to deviate from its nominal circular cross section. As the drill then progresses through the workpiece at the wrong angle, the periphery of the cutting end and support surfaces of the drill envelope are push against the hole wall, something that causes significant wear.

All in all, an incorrect entry into the workpiece may be detrimental to the quality of the drilled hole.

Thanks to the central web thinning also having the function of a secondary clearance surface, the clearance is improved without having to increase the primary clearance angle or shortening the primary clearance surface, which also strengthens the cutting edge.

The drill cutting head according to the invention may be in the form of a solid twist drill in a single piece, or in the form of an exchangeable head mountable on a drill tool body. The drill cutting head may e.g. be manufactured from cemented carbide with an added wear resistant coating as an option.

In the present invention, drill cutting head may be a twist drill or exchangeable head comprises an axially rearward-facing mount end. For a solid twist drill, the mount end may e.g. be formed as a straight or tapered shank adapted to be mounted in a support body, e.g. a chuck or tool holder. For an exchangeable head, the mount region comprises an interface adapted to be mounted in a support body, e.g. a jaw-like forward-facing receiving end of a drill tool body, which may comprise a screw or a bayonet connection to securely clamp the exchangeable head.

The present invention comprises an axially forward-facing cutting end and a central rotational axis extending between the mount end and the cutting end. The cutting end comprises at least two main cutting edges that extend from a central edge that intersects the central rotational axis. The main cutting edges extend radially outward from the central edge along the transition between the clearance side and the rake side. The exact geometric properties of the main cutting edges may vary depending on the material of the workpiece to be machined. The geometric properties of the main cutting edges may also vary to compensate for the fact that the cutting speed varies with the radial distance from the central rotating axis.

For each main cutting edge, the drill cutting head comprises a chip flute configured for conducting chips away from the main cutting edge, and which is formed in the peripheral envelope surface and extend rearward from the cutting end.

For each cutting edge, the drill cutting head also comprises a clearance side which comprises at least a primary clearance surface. The primary clearance surface is directly behind the cutting edge in the rotational direction. A clearance surface is meant to create room behind the cutting edge so the axial feed of the drill into the workpiece does not cause the area behind the cutting edge in the rotational direction to make contact with the bottom of the hole. This means that the feed rate and the clearance angle have to be adapted to one another. A larger clearance angle allows for a higher feed rate. When increasing the clearance angle, the cutting edge gets weaker. The most critical place along the main cutting edge in terms of clearance is closest to the center.

For each cutting edge, the drill cutting head comprises a primary web thinning, which extends between the chip flute and the primary clearance surface of the rotationally leading cutting edge. The primary web thinning reduces the width of the drill core, or the so-called web, at the cutting end and thus makes the cutting end pointier.

The central web thinning and the primary web thinning concavity each comprises a rake face and thus create segments of the main cutting edge. The central web thinning creates the rake surface of the inner cutting-edge section. This section extends radially outward from the central edge. The primary web thinning makes out the rake surface for a second cutting edge section. The second main cutting-edge section extends radially outward from the inner main cutting-edge section. The chip flute comprises the rake surface of a third main cutting-edge section. The third main cutting-edge section extends radially outward from the second main cutting-edge section. The transitions between the main cutting-edge sections create obtuse angles in the main cutting edge. The inner cutting-edge section is preferably the shortest, whereas the third main cutting-edge section is preferably the longest.

In the embodiments of the present invention, the central web thinning is situated such that it extends between the primary web thinning and the primary clearance surface of the rotationally leading main cutting edge, thereby separating the two, partly or fully. Expressed alternatively, extends as a transition radially outwards between the primary web thinning and the primary clearance surface of the rotationally leading main cutting edge. The central web thinning may comprise the rake face for the inner cutting-edge section at the same time as being a secondary clearance surface for the rotationally leading main cutting edge. The positioning of the inner cutting-edge section and of the central web thinning in conjunction with the primary web thinning has been shown to have positive effects on the drill cutting head performance.

In the embodiments of the inventions, the central web thinning and innermost cutting-edge section, apart from making the drill point sharper, also increase the clearance without weakening the main cutting edge.

According to an embodiment, the central web thinning, when seen in a top view perpendicular to the central rotational axis, extends radially outward from the central edge so that the maximum radial extension is contained in a circle with the origin in the central rotational axis and the diameter of 0.1 x D - 0.4 x D, or more preferably 0.15 x D - 0.35 x D.

In an embodiment of the present invention, the primary web thinning is delimited by the central web thinning and the chip flute for the trailing main cutting edge and at least the primary clearance surface of the leading main cutting edge.

The length of the central edge as well as the width of the web of the drill influence the behaviour of the drill. In the present invention the features of the central web thinning allow the central edge to be shorter than normal without weakening the drill point as it also creates a larger drill point angle. According to an embodiment, the total width of the web is 0.05 x D - 0.15 x D (as an imaginary circle intersecting the respective transitions between the innermost and second main cutting-edge sections), or 0.25 x D - 0.35 x D if measured between the transitions between the second and third cutting edge sections. According to an embodiment, the central web thinning creates a strongly negative inner rake angle and an unusually short central edge, and the drill point achieves a surprising combination of strength, incisiveness and wear resistance.

The power requirements on the machine are also kept low due to the moderate torque and feed force required to rotate and feed the drill through the workpiece. A shorter central edge may normally create clearance issues, but this is avoided in the present invention. The rake angle of the innermost rake face is preferably less than -30 degrees.

According to an embodiment, the present invention may have a rake face of second main cutting-edge section that is also negative, and preferably less negative than the rake face of the inner main cutting-edge section. More preferably it is between -30 and 0 degrees

The rake angle referred to in the present invention is defined as the angle between a tangent to the rake face and a line parallel to the rotational axis of the drill.

The rake face of the third cutting edge section is preferably the largest of the rake faces. As opposed to the rake faces of the first and the second cutting edge sections, the rake face of the third cutting edge section has a positive rake angle.

### DESCRIPTION OF THE DRAWINGS

Embodiments of the invention will in the following be described by means of example with reference to the appended drawings, in which:
Fig 1 shows a top view of an embodiment of the drill cutting head.
Fig 2 shows a top view of an embodiment of the drill cutting head.
Fig 3 shows a side view of the drill cutting head seen substantially parallel to the innermost cutting-edge section.
Fig 4 shows a side view of the drill cutting head seen substantially perpendicular to the innermost cutting-edge section.

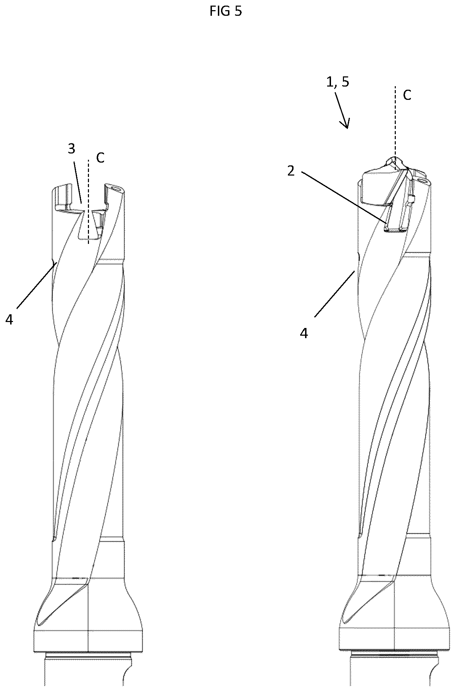

Fig 5 shows a drill tool body as well as a drill tool body with a drill cutting head mounted creating a complete drill tool.

### DETAILED DESCRIPTION OF EMBODIMENTS OF THE INVENTION

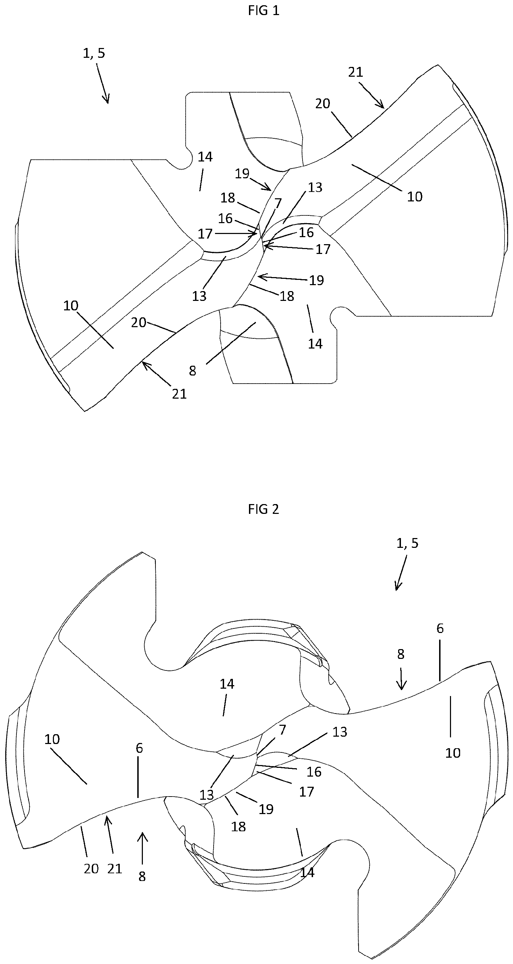

A drill cutting head (1) drill according to embodiments of the invention is shown in a top view toward the axially forward-facing cutting end (5) in figures 1 and 2. The drill cutting head (1) comprises an axially rearward-facing mount end (2) and an axially forward-facing cutting end (5) for cutting a hole with diameter D in a workpiece of metal as well as a central rotational axis (C) extending between the mount end (2) and the cutting end (5). The cutting end (5) comprises two main cutting edges (6) which extend from a central edge (7), which central edge attaches to the central rotational axis (C) around which the drill rotates in direction R.

For each main cutting edge (6), the drill cutting head (1) comprises a rake side comprising a helical chip flute (8) configured for conducting chips away from the main cutting edge (6), and which is formed in the peripheral envelope surface and extend rearward from the cutting end (5). The drill cutting head (1) further comprises a clearance side (9) comprising a primary clearance surface (10).

For each main cutting edge (6), a central web thinning (13) extends radially outward from the central edge (7) along the transition between the primary web thinning (14) and the primary clearance surface (10) of the rotationally leading main cutting edge to partly separate them. Each main cutting edge (6) extends in a transition between the rake side and the clearance side. The central web thinning (13) comprises the rake face (17) of the inner cutting-edge section (16). The primary web thinning comprises the rake face (19) for a second cutting edge section (18) extending radially outward from the innermost section. The chip flute (8) comprises the rake face (21) for a third cutting edge section (20) extending outward from the second section.

In the embodiment shown in fig 1, the drill cutting head (1) comprises two main cutting edges as well as, for each cutting edge, a central web thinning (13) that extends radially outwards from the central edge (7) and the innermost main cutting-edge section (16) in the shape of a curved rectangle. It extends between the primary web thinning (14) of the rotationally trailing main cutting edge and the primary clearance surface (10) of the rotationally leading main cutting edge (6), bending in the opposite direction to the drill rotational direction (R). Its rotationally leading long side constitutes the limit toward the primary clearance surface (10), whereas the rotationally trailing long side constitutes a delimitation to the primary web thinning (14). The long sides are curved both radially and axially. The radially inner short side of the central cavity (13) constitutes the innermost main cutting-edge section (16) and its surface adjacent to the inner cutting-edge section (16) constitutes the innermost rake face (17). Seen in relation to the main cutting edge (6) for which a central web thinning (13) comprises a rake face, it is on the rake side and thus has the function of a web thinning. Seen in relation to the other, rotationally leading main cutting edge (for which the same central concavity (13) does not comprise a rake face), the central concavity (13) is on the clearance side (9) and constitutes the secondary clearance surface (11) for that cutting edge (6).

The primary web thinning (14) extends between the chip flute (8) of the rotationally trailing main cutting edge, and the primary clearance surface (10) for the rotationally leading main cutting edge (6).

With reference to fig 1 and 2 as well as 3 and 4, the main cutting-edge sections (16, 18, 20) extend both in a straight and curved manner. The inner cutting-edge section (16) is straight both seen in an axial and radial view, whereas the second cutting edge section (18) is curved both radially and axially. The third main cutting-edge section (20) is curved radially but not axially.

For a drill (1) according to the embodiment shown in figs 1, 3 and 4 with D = 18.00mm, the central edge (7) is 150µm and the innermost main cutting-edge section (16) is 0.53mm. The second cutting-edge section (14) extends over about 2.45mm. The central concavity (13) has a maximum radial extension (measured perpendicular to the central rotational axis (C)) of 2.8mm, which is equivalent to 0.15 x D. The web of the drill, here defined as the distance between the transitions between the innermost (16) and the second (18) main cutting-edge sections, is 1.10mm, equivalent to 0.06 x D. The distance between the transitions between the second (18) and the third (20) cutting-edge sections is 5.44mm, equivalent to 0.3 x D. The third main cutting-edge section (20) is 6.05mm.

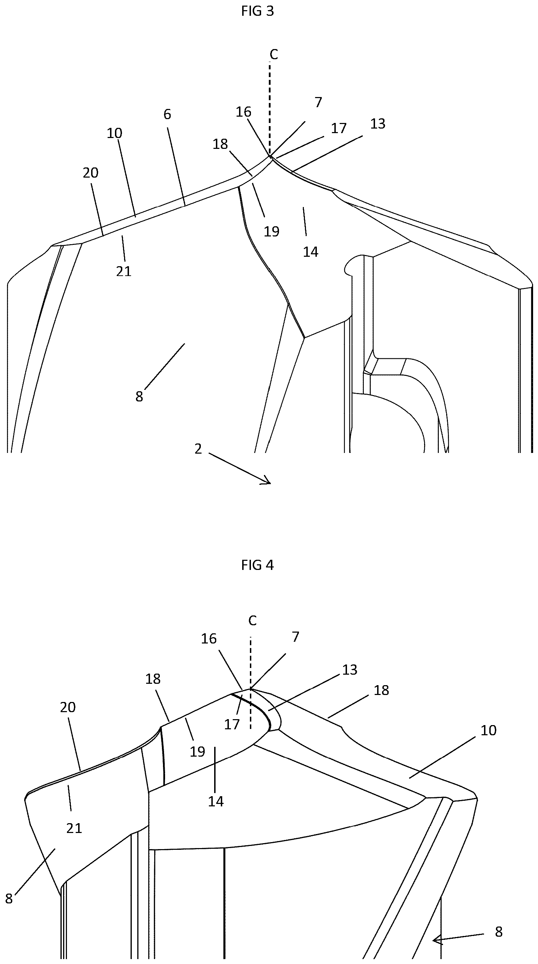

With reference to figures 3 and 4, the drill point of the drill cutting head (1) can be seen in two different views. In figure 3, the drill cutting (1) is seen from a view roughly parallel to the first cutting-edge section (16). In this view, the angle between the respective cutting-edge sections (16, 18, 20) has a decreasing angle moving toward the central rotational axis (C) and compared to the view in figure 4, which is roughly perpendicular to the first main cutting-edge section (16), it is increasing.

With reference to figures 1-4, the rake angle of the inner rake face (17) is negative. The rake angle of the second rake face (19) is still negative but less negative than that of the inner rake face. The rake angle of the third (21) rake face is positive.

The invention is not limited to the embodiments disclosed but may be varied and modified within the scope of the following claims.

## Claims

1. A drill cutting head (1) for chip removing metal machining comprising:
- an axially rearward-facing mount end (2),
- an axially forward-facing cutting end (5) for cutting a hole with a diameter D in a workpiece,
- a central rotational axis (C) extending between the mount end and the cutting end,
- a peripheral envelope surface formed at the radially outer regions of the drill cutting head,
- a central edge (7) which attaches to the central rotational axis,
- at least two main cutting edges (6) which each extend radially outward from a respective radially outer end of the central edge, and which each have a clearance side and a rake side, wherein a pair of the at least two cutting edges consist of a rotationally trailing main cutting edge and a directly rotationally leading main cutting edge,
- wherein each of the clearance sides comprises at least a primary clearance surface (10), and
- wherein each of the rake sides comprises
- a helical chip flute (8) configured for conducting chips away from the main cutting edge, and which is formed in the peripheral envelope surface and extend rearward from the cutting end,
- a primary web thinning (13),
wherein, for each of the pairs of cutting edges, the primary web thinning extends between and borders the chip flute of the trailing main cutting edge and the primary clearance surface of the leading main cutting edge,
***characterized in that***
- each main cutting edge comprises an innermost cutting-edge (16) section creating an obtuse angle in the main-cutting edge towards the central edge, and
- **in that** a central web thinning forms an inner rake surface (17) for the innermost cutting-edge section
wherein, for each of the pairs of cutting edges,
- the central web thinning is formed between and borders the primary web thinning of the trailing main cutting edge and the primary clearance surface of the rotationally leading main cutting edge

2. The drill cutting head (1) according to claim 1, wherein the angle between the innermost cutting-edge sections (16) and the attaching main cutting edge (6) as seen in a top view, measured tangentially to the cutting edge in a transition point, is 130-165 degrees

3. The drill cutting head according to claim 1 or 2, wherein, as seen in a side view substantially perpendicular to the innermost cutting-edge section, the angle between each of the innermost cutting-edge sections and the central rotational axis is larger than for any of the other cutting-edge sections with the central rotational axis

4. The drill cutting head according to any of the preceding claims, wherein the central web thinning extends along the primary clearance surface to a point at a radial distance from the central rotational axis that is within an imaginary circle perpendicular to, and with origin in, the central rotational axis and with a diameter in the range of 0.1 x D to 0.4 x D

5. The drill cutting head according to claim 4, wherein the central web thinning extends along the primary clearance surface to a point at a radial distance from the central rotational axis that is within an imaginary circle perpendicular to, and with origin in, the central rotational axis and with a diameter in the range of 0.15 x D to 0.35 x D

6. The drill cutting head according to any of the preceding claims, wherein the transition between the innermost and the second main cutting-edge sections for each cutting edge is within an imaginary circle perpendicular to, and with origin in, the central rotational axis and with a diameter in the range of 0.05 x D to 0.15 x D

7. The drill cutting head according to any of the preceding claims, wherein the transition between the second and the third main cutting-edge sections for each cutting edge is within an imaginary circle perpendicular to, and with origin in, the central rotational axis and with a diameter in the range of 0.25 x D to 0.35 x D

8. The drill cutting head according to any of the preceding claims, wherein the rake angle of the rake surface of the inner cutting-edge section is negative

9. The drill cutting head according to claim 8, wherein the rake angle of the inner rake surface < -30 degrees

10. The drill cutting head according to claims 8 or 9, wherein the rake angle of the second rake surface is negative

11. The drill cutting head according to claim 10, wherein the rake angle of the second rake surface is between -30 and 0 degrees

12. The drill cutting head according claims 10 or 11, wherein the rake angle of the inner rake surface is more negative than that of the second rake surface
